# EUROPÄISCHE PATENTANMELDUNG

(11) **EP 1 113 601 A2**
(43) Veröffentlichungstag der Anmeldung: **04.07.2001**
(21) Anmeldenummer: 00125623.9
(22) Anmeldetag: 23.11.2000
(51) Int. Cl.: H04H 1/00, H04N 7/10

(54) **Fernsteuerbare Antennensteckdose die geeignet ist, die über ein Kabelnetz übertragenen Rundfunksignalen nur teilweise zur Verfügung zu stellen**

(30) Priorität: 25.11.1999 DE 19956680
(71) Anmelder: Grundig AG, 90471 Nürnberg (DE)
(72) Erfinder: Bierschneider, Michael, 90471 Nürnberg (DE)

(57) **Zusammenfassung**

Die Erfindung betrifft eine Antennendose, welche einen Eingang für über ein Antennenkabel in einer Vielzahl von unterschiedlichen Frequenzkanälen übertragene Rundfunksignale aufweist. Weiterhin enthält sie einen Frequenzgenerator, mittels dessen Störsignale vorgegebener Frequenz erzeugbar sind. Einer Überlagerungsschaltung werden eingangsseitig die übertragenen Rundfunksignale und die Ausgangssignale des Frequenzgenerators zugeführt. Am Ausgang der Überlagerungsschaltung stehen Rundfunksignale zur Verfügung, von denen vorgegebene mit Störsignalen beaufschlagt sind.

## Beschreibung

Die Erfindung betrifft eine Antennendose, welche einen Eingang für über ein Antennenkabel in einer Vielzahl von unterschiedlichen Frequenzkanälen übertragene Rundfunksignale aufweist.

Es ist bekannt, einem Endverbraucher an einer Antennensteckdose in einer Vielzahl von unterschiedlichen Frequenzkanälen übertragene Rundfunksignale zur Verfügung zu stellen. Bekannte Antennensteckdosen weisen einen ersten Ausgangsanschluß für Fernsehsignale und einen zweiten Ausgangsanschluß für Hörrundfunksignale auf. Von dort aus werden die Rundfunksignale an Rundfunkempfangsgeräte weitergeleitet, mittels derer jeweils ein gewünschtes Signal ausgewählt und wiedergegeben werden kann.

Im Zusammenhang mit in Wohnblocks oder Hotelanlagen aufgestellten Rundfunkempfangsgeräten ist es bereits bekannt, Rundfunksignale mittels einer Kopfstation aufzubereiten und in Antennenkabel einzuspeisen, die zu den einzelnen Wohneinheiten bzw. Zimmern führen.

Ferner ist es bereits bekannt, gebührenpflichtige Fernseh- und/oder Hörrundfunksendungen auszustrahlen, die nur für Benutzer empfangbar bzw. decodierbar sein sollen, die ein entsprechendes Entgelt entrichtet haben.

Ausgehend von diesem Stand der Technik liegt der Erfindung die Aufgabe zugrunde, einen neuen Weg zum selektiven Empfang von über ein Antennenkabel übertragenen Rundfunksignalen aufzuzeigen.

Diese Aufgabe wird durch Verwendung einer Antennendose mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, daß zur Realisierung eines selektiven Empfangs von Rundfunksignalen keinerlei Umbaumaßnahmen an einer bereits vorhandenen Antennenverkabelung innerhalb des jeweiligen Gebäudes vorgenommen werden müssen. Es ist lediglich notwendig, eine bereits vorhandene Antennensteckdose durch eine Antennendose gemäß der Erfindung zu ersetzen oder im Falle eines Neubaus eine Antennendose gemäß der Erfindung einzusetzen.

Ist der in der Antennendose angeordnete Frequenzgenerator mittels einer Steuereinheit steuerbar, die vorzugsweise durch einen Mikrocomputer realisiert ist, dann ist es auf einfache Weise möglich, einen selektiven, störungsfreien Empfang für definierte Frequenzkanäle schnell zu realisieren und bei Bedarf auch schnell zu ändern. Dies erlaubt es beispielsweise, ohne großen Aufwand bestimmte Frequenzkanäle für definierte Zeiträume freizuschalten oder zu sperren.

Weist die Antennendose einen Speicher für ein der Antennendose individuell zugeordnetes Kennsignal auf, dann besteht die Möglichkeit, von der Kopfstation aus zu überprüfen, ob die jeweilige Antennendose nach wie vor in Betrieb ist oder nicht. Erfolgt auf eine entsprechende Anfrage der Kopfstation keine korrekte Rückmeldung mit dem jeweiligen Kennsignal, dann erkennt die Kopfstation das Vorliegen einer unerlaubten Manipulation auf der Seite des Endverbrauchers und gibt eine zugehörige Meldung aus. Auf Grund dieser Meldung kann der Betreiber der Kopfstation geeignete Gegenmaßnahmen in die Wege leiten.

Weitere vorteilhafte Eigenschaften der Erfindung ergeben sich aus der Erläuterung von Ausführungsbeispielen anhand der Figuren. Es zeigt:
- Figur 1: ein erstes Ausführungsbeispiel für die Erfindung und
- Figur 2: ein zweites Ausführungsbeispiel für die Erfindung.

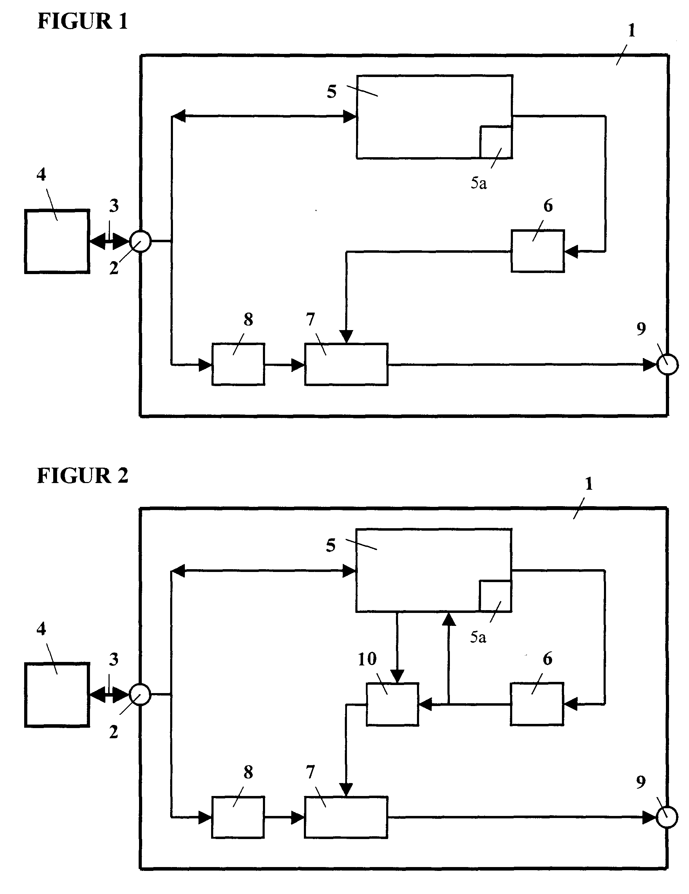

Die Figur 1 zeigt ein erstes Ausführungsbeispiel für die Erfindung. Bei diesem ist eine Antennendose 1 über ein Antennenkabel 3 an eine Kopfstation 4 angeschlossen.

Die Kopfstation 4 ist auf dem Dachboden eines größeren Wohnblocks oder einer Hotelanlage angeordnet. Sie stellt an ihrem Ausgang Rundfunksignale bereit, die in einer Vielzahl von unterschiedlichen Frequenzkanälen vorliegen und insgesamt in einem Frequenzbereich von 48 MHz bis 860 MHz angesiedelt sind. Die genannten Frequenzkanäle können unterschiedliche Bandbreiten aufweisen und zur Übertragung analoger oder digitaler Fernseh- und/oder Hörrundfunksignale vorgesehen sein. Beispielsweise sei angenommen, daß Rundfunksignale, die im Frequenzbereich üblicherweise zwischen 48 MHz und 480 MHz liegen, frei für alle Benutzer zugänglich sein sollen, daß Rundfunksignale, die im Frequenzbereich von 480 MHz bis 720 MHz liegen, nur für eine erste Benutzergruppe zugänglich sein sollen, die für die zugehörige Empfangsberechtigung bezahlt hat, und daß Rundfunksignale, die im Frequenzbereich von 720 MHz bis 860 MHz liegen, nur für eine zweite Benutzergruppe zugänglich sein sollen, die für diese Empfangsberechtigung bezahlt hat.

In der Kopfstation 4 sind für jeden angeschlossen Endverbraucher ein diesem individuell zugehöriges Kennsignal der Antennendose, bei welchem es sich um eine Seriennummer handeln kann, sowie die zugehörigen Empfangsberechtigungen registriert. Diese Daten werden in Form eines Protokolls als digitale Steuerdaten zusammen mit den Rundfunksignalen über das Antennenkabel 3 an die Endverbraucher bzw. deren Antennendosen 1 übertragen. Für die Übertragung der Steuerdaten wird vorzugsweise ein Frequenzbereich verwendet, der unterhalb von 48 MHz liegt.

In der Antennendose 1 gelangen die empfangenen Signale vom Eingang 2 an eine Steuereinheit 5, die in Form eines Mikrocomputers realisiert ist. Dieser weist einen Speicher 5a auf, in welchem das der Antennendose zugehörige individuelle Kennsignal abgespeichert ist. Der Mikrocomputer 5 wertet die über das Antennenkabel 3 angelieferten Steuerdaten aus, die Informationen über die der Antennendose zugehörigen Empfangsberechtigungen enthalten, und erzeugt an seinem Ausgang Steuersignale für den Frequenzgenerator 6. Dessen Ausgangssignale können zwar den gesamten Frequenzbereich der Rundfunksignale von 48 MHz bis 860 MHz überstreichen, werden aber in Abhängigkeit von den Steuersignalen der Steuereinheit 5 dahingehend gesteuert, daß lediglich in definierten Frequenzkanälen, für die der Endverbraucher keine Empfangsberechtigung hat, Störsignale erzeugt werden. Diese werden in einer Überlagerungsschaltung 7 dem über das Antennenkabel 3 angelieferten Signal überlagert. Die Folge dieser Überlagerung ist, daß in allen Frequenzkanälen, für die der Endverbraucher keine Empfangsberechtigung hat, das übertragene Signal von Störsignalen überlagert ist.

Um sicherzustellen, daß die mittels des Frequenzgenerators erzeugten Störsignale nicht in unerwünschter Weise Einfluß auf die im Antennenkabel 3 auch zu anderen Endverbrauchern gelieferten Signale ausüben können, ist zwischen dem Eingang 2 der Antennendose 1 und der Überlagerungsschaltung 7 eine Entkopplungsschaltung 8 vorgesehen.

Nachfolgend wird die Funktionsweise der in der Figur 1 gezeigten Vorrichtung beispielhaft erläutert.

Hat beispielsweise der Endverbraucher die Berechtigung, sämtliche übertragenen Rundfunksignale empfangen zu können, dann erzeugt die Steuereinheit 5 die Steuersignale für den Frequenzgenerator 6 derart, daß dieser an seinem Ausgang keinerlei Störsignale bereitstellt. Folglich gelangen die über das Antennenkabel angelieferten Rundfunksignale ungestört über die Entkopplungsschaltung 8 und die Überlagerungsschaltung 7 an den Ausgang 9 der Antennendose 1 und können von dort aus an ein angeschlossenes Rundfunkempfangsgerät weitergeleitet werden.

Hat der Endverbraucher hingegen lediglich die Berechtigung, die im Frequenzbereich von 48 MHz bis 480 MHz liegenden, frei zugänglichen Rundfunksignale zu empfangen, dann erzeugt die Steuereinheit 5 die Steuersignale für den Frequenzgenerator 6 derart, daß die von diesem erzeugten Störsignale den Frequenzbereich von 480 MHz bis 860 MHz überdecken. Diese Störsignale werden mittels der Überlagerungsschaltung 7 den über das Antennenkabel 3 angelieferten Signalen überlagert. Die Folge dieser Überlagerung ist, daß die im Frequenzbereich zwischen 480 MHz und 860 MHz liegenden Rundfunksignale so stark gestört sind, daß sie für den Endverbraucher unbrauchbar sind.

Liegt dem Endverbraucher die Berechtigung vor, die im Frequenzbereich von 48 MHz bis 480 MHz liegenden, frei zugänglichen Rundfunksignale und die im Frequenzbereich von 480 MHz bis 720 MHz liegenden Rundfunksignale zu empfangen, dann erzeugt die Steuereinheit 5 die Steuersignale für den Frequenzgenerator 6 derart, daß die von diesem erzeugten Störsignale den Frequenzbereich von 720 MHz bis 860 MHz überdecken. Diese Störsignale werden mittels der Überlagerungsschaltung 7 den über das Antennenkabel 3 angelieferten Signalen überlagert. Die Folge dieser Überlagerung ist, daß die im Frequenzbereich zwischen 720 MHz und 860 MHz liegenden Rundfunksignale so stark gestört sind, daß sie für den Endverbraucher unbrauchbar sind.

Hat der Endverbraucher die Berechtigung, die im Frequenzbereich von 48 MHz bis 480 MHz liegenden, frei zugänglichen Rundfunksignale und die im Frequenzbereich von 720 MHz bis 860 MHz liegenden Rundfunksignale zu empfangen, dann erzeugt die Steuereinheit 5 die Steuersignale für den Frequenzgenerator 6 derart, daß die von diesem erzeugten Störsignale den Frequenzbereich von 480 MHz bis 720 MHz überdecken. Diese Störsignale werden mittels der Überlagerungsschaltung 7 den über das Antennenkabel 3 angelieferten Signalen überlagert. Die Folge dieser Überlagerung ist, daß die im Frequenzbereich zwischen 480 MHz und 720 MHz liegenden Rundfunksignale so stark gestört sind, daß sie für den Endverbraucher unbrauchbar sind.

Vorzugsweise wird von einem der Kopfstation 4 zugeordneten Rechner permanent oder in vorgegebenen Zeitabständen ein an die Antennendose gerichtetes Abfragesignal ausgesandt. Aufgrund dieser Anfrage liest die Steuereinheit 5 das im Speicher 5a abgespeicherte Kennsignal für die Antennendose aus und sendet ein dieses Kennsignal enthaltendes Antwortsignal an die Kopfstation 4 aus. Diese erkennt beim Vorliegen des Antwortsignals, daß die zugehörige Antennendose nach wie vor vorhanden ist und ordnungsgemäß arbeitet. Bleibt hingegen das genannte Antwortsignal aus, dann erkennt der der Kopfstation 4 zugeordnete Rechner, daß eine Störung vorliegt, und initiiert die Ausgabe eines zugehörigen Meldesignals. Aufgrund dieses Meldesignals kann der Betreiber der Kopfstation geeignete Gegenmaßnahmen in die Wege leiten.

Das Ausbleiben des Antwortsignals kann beispielsweise darauf zurückzuführen sein, daß ein Endverbraucher, der keine Berechtigung hat, die in den Frequenzbereichen von 480 MHz bis 720 MHz und 720 MHz bis 860 MHz übertragenen Signale zu empfangen, die Antennendose entfernt und durch eine für alle Signale durchlässige Schaltung oder ein alle Signale weiterleitendes Kabel ersetzt hat. Auf ein derartiges Vorgehen kann nach dem Erkennen einer unterbliebenen Rücksendung des Antwortsignals schnell reagiert werden.

Gemäß einer weiteren, bevorzugten Ausführungsform der Erfindung erzeugt die Steuereinheit 5 die Steuersignale für den Frequenzgenerator 6 derart, daß dieser Störsignale vorgegebener Frequenz erzeugt, die lediglich einem einzigen Frequenzkanal entsprechen. Bei dieser Ausführungsform kann Kanal für Kanal entschieden werden, ob das dort übertragene Rundfunksignal störungsfrei oder gestört am Ausgang der Antennendose zur Verfügung gestellt wird.

Die Stromversorgung der Antennendose bzw. der darin befindlichen Bauteile erfolgt in vorteilhafter Weise über das Antennenkabel, so daß gesonderte Stromquellen nicht notwendig sind.

Die Figur 2 zeigt ein zweites Ausführungsbeispiel für die Erfindung. Dieses unterscheidet sich vom Ausführungsbeispiel gemäß Figur 1 dadurch, daß zwischen dem Frequenzgenerator 6 und der Überlagerungsschaltung 7 ein Schalter 10 angeordnet ist. Dieser wird ebenfalls von der Steuereinheit 5 angesteuert, die zum Zwecke der Erzeugung der genannten Steuersignale das Ausgangssignal des Frequenzgenerators 6 überwacht und für eine zeitgerechte schnelle Umschaltung des Schalters 10 sorgt. Dadurch ist sichergestellt, daß an dessem Ausgang lediglich die gewünschten Störsignale vorliegen und frequenzmäßig unmittelbar benachbarte Rundfunksignale nicht in unerwünschter Weise von Störsignalen beaufschlagt werden.

## Patentansprüche

1. Antennendose, welche einen Eingang für über ein Antennenkabel in einer Vielzahl von unterschiedlichen Frequenzkanälen übertragene Rundfunksignale aufweist,
**dadurch gekennzeichnet, daß**
sie einen Frequenzgenerator (6) aufweist, mittels dessen Störsignale vorgegebener Frequenz erzeugbar sind, daß sie eine Überlagerungsschaltung (7) aufweist, der eingangsseitig die übertragenen Rundfunksignale und die Ausgangssignale des Frequenzgenerators (6) zuführbar sind, und daß die Überlagerungsschaltung (7) ausgangsseitig Rundfunksignale zur Verfügung stellt, von denen vorgegebene mit Störsignalen beaufschlagt sind.

2. Antennendose nach Anspruch 1,
**dadurch gekennzeichnet, daß**
sie eine Steuereinheit (5) aufweist, die zur Generierung von Steuersignalen für den Frequenzgenerator (6) vorgesehen ist.

3. Antennendose nach Anspruch 2,
**dadurch gekennzeichnet, daß**
die Steuereinheit (5 ) Mittel zur Auswertung von über das Antennenkabel (3) übertragenen Steuerdaten aufweist und die Steuersignale in Abhängigkeit von den ausgewerteten Steuerdaten erzeugt.

4. Antennendose nach Anspruch 3,
**dadurch gekennzeichnet, daß**
die Steuerdaten über das Antennenkabel (3) in einem eigenen, von den Frequenzkanälen der Rundfunksignale verschiedenen Frequenzbereich übertragen werden.

5. Antennendose nach Anspruch 4,
**dadurch gekennzeichnet, daß**
die Rundfunksignale in einem Frequenzbereich zwischen 48 MHz und 860 MHz und die Steuerdaten unterhalb von 48 MHz übertragen werden.

6. Antennendose nach einem der Ansprüche 3 bis 5,
dadurch gekennzeichnet, daß
die Steuerdaten in einer Kabelkopfstation (4) generiert werden.

7. Antennendose nach einem der vorhergehenden Ansprüche,
**dadurch gekennzeichnet, daß**
sie einen Speicher (5a) aufweist, in welchem ein der Antennendose (1) individuell zugeordnetes Kennsignal abgespeichert ist und/oder das Antennenkabel (3) zu einer bidirektionalen Signalübertragung dient und die Steuereinheit (5) eine Übertragung des Kennsignals zur Kabelkopfstation (4) steuert.

8. Antennendose nach einem der vorhergehenden Ansprüche,
**dadurch gekennzeichnet, daß**
die Stromversorgung der Antennendose über das Antennenkabel (3) erfolgt.

9. Antennendose nach einem der vorhergehenden Ansprüche,
**dadurch gekennzeichnet, daß**
zwischen ihrem Eingang (2) und der Überlagerungsschaltung (7) eine Entkopplungsvorrichtung (8) vorgesehen ist.

10. Antennendose nach einem der vorhergehenden Ansprüche,
**dadurch gekennzeichnet, daß**
zwischen dem Frequenzgenerator (6) und der Überlagerungsschaltung (7) ein Schalter (10) vorgesehen ist und/oder die Steuereinheit (5) zur Erzeugung eines Schaltsignals für den Schalter (10) vorgesehen ist und/oder die Steuereinheit (5) Mittel zur Überwachung der Frequenz des Ausgangssignals des Frequenzgenerators (6) aufweist und das Schaltsignal für den Schalter (10) in Abhängigkeit von der Frequenz des Ausgangssignals des Frequenzgenerators (6) erzeugt.

11. Antennendose nach einem der vorhergehenden Ansprüche,
**dadurch gekennzeichnet, daß**
die Ausgangssignale der Überlagerungsschaltung (7) einem gemeinsamen Ausgangsanschluß (9) der Antennendose (1) zugeführt sind und der gemeinsame Ausgangsanschluß ein Fernsehsignal- und/oder ein Tonrundfunksignal-Ausgangsanschluß ist und/oder die übertragenen Rundfunksignale analoge und/oder digitale Rundfunksignale sind.
